# EUROPEAN PATENT SPECIFICATION

(11) **EP 3 679 175 B1**
(45) Date of publication and mention of the grant of the patent: **22.12.2021**
(21) Application number: 18769279.3
(22) Date of filing: 05.09.2018
(51) Int. Cl.: C25B 1/04, C25B 3/26, C25B 9/05, C25B 9/15, C25B 9/23, C25B 13/05

(54) **METHOD AND APPARATUS FOR METHANE PRODUCTION**
VERFAHREN UND VORRICHTUNG ZUR METHANPRODUKTION
PROCÉDÉ ET APPAREIL DE PRODUCTION DE MÉTHANE

(30) Priority: 07.09.2017 DK PA201770669; 08.02.2018 DK PA201870080
(43) Date of publication of application: 15.07.2020
(73) Proprietor: CO2Techn ApS, 2920 Charlottenlund (DK)
(72) Inventor: BJERRUM, Niels Janniksen, 2929 Charlottenlund (DK); CHRISTENSEN, Erik, 2800 Kgs. Lyngby (DK); PETROUCHINA, Irina Mikhailovna, 2900 Hellerup (DK); NIKIFOROV, Aleksey, 2860 Søborg (DK); BERG, Rolf Willestofte, 2840 Holte (DK)
(74) Representative: Zacco Denmark A/S
(86) International application number: PCT/DK2018/050221
(87) International publication number: WO 2019/048016

(56) References cited:
- US-A- 4 897 167
- US-A1- 2012 329 657

## Description

### TECHNICAL FIELD

The present invention is in the field of electrolytic conversion of carbon dioxide to methane and relates to a method and an apparatus for 1-step electrolytic methane production by co-electrolysis of the reactants.

### BACKGROUND

In recent years, many countries including Denmark, have invested heavily in alternative sources of energy in order to reduce national dependencies on fossilized fuels and to reduce emissions of carbon dioxide to the atmosphere. Particularly wind power has become an important energy source, in Denmark supplying up to more than 35% of the total energy consumption of the country.

Unfortunately, wind power has the drawback that power consumption in the society surrounding a wind power plant or wind power farm may not necessarily coincide with optimum wind conditions to the extent that many wind power plants are taken off-line from the power grid, even when optimal conditions are present for wind energy production, as end consumers are missing. This situation has led to a wide range of proposals aimed at storing the surplus energy generated by wind power plants for a later time.

One such proposal currently considered is to use surplus energy, preferably surplus electrical energy, for the reconversion of carbon dioxide into combustible carbon compounds such as e.g. methane or higher alkanes, by reduction of carbon dioxide with water in electrolytic cells.

Traditionally, this electrolytic reconversion has been obtained in one of at least two possible two-step conversion processes, either by first obtaining H₂ by electrolysis of water followed by subsequent conversion of CO₂ with H₂ in a Sabatier process, or co-electrolysis of CO₂ and H₂O to form a syngas mixture of CO and H₂, which is then subsequently reacted in a Fischer-Tropsch process to yield methane and water. However, as the overall energy efficiency of the two-step processes is low, research initiatives in recent years have sought to improve this deficiency.

One possible solution is the substitution of the 2-step conversion process with a 1-step co-electrolytic conversion process of H₂O and CO₂ to CH₄ and O₂. The theoretical energy savings from a 1-step methanization process compared to a 2-step methanization from CO₂ is about 17% at atmospheric pressure and room temperature and due to increased reaction efficiency and changed conditions at increased temperatures, further gains of about 20% energy savings may be achievable. Hence, a 1-step co-electrolytic conversion process of H₂O and CO₂ to CH₄ and O₂ is highly desirable over the 2-step methods of the prior art.

US 4 897 167 A discloses the use of an electrolyte comprising an aqueous solution of inorganic salt, e.g. KHSO₄, KH₂PO₄ and K₂HPO₄, in a process for electrochemical reduction of CO₂ to CH₄ and C₂H₄.

US 2012/329657 A1 discloses a device for the gas-phase electrochemical reduction of a carbon-containing gas to produce one or more hydrocarbons in which a protonic conductor, e.g. CsHSO₄, may be comprised in the electrolyte of the device.

Ebbesen et al. report (Chem. Rev., 2014, 114, 10697-10734), that solid proton conducting electrolysis cells (SPCEC) have been applied for electrolysis of water combined with electrochemical conversion of CO₂. This process is often mentioned as co-electrolysis of CO₂ and H₂O, although in the mechanism reactions (1)-(3) only H₂O is involved (in fact electrolyzed). Rather, CO₂ is electrochemically converted to CH₄ in a one-step process by reaction with protons released at the cathode, reaction (2). Also reported was the use of SPCECs for production of hydrogen with simultaneous upgrading of methane to higher hydrocarbons.

Using proton-conducting oxides as electrolyte and suitable BCZYZ electrodes (BaCe_{0.5}Zr_{0.3}Y_{0.16}Zn_{0.04}O_{3-δ}) as electrolyte with an iron based composite fuel electrode (cathode), it was found that it was possible to convert 1-2% of the available CO₂ into methane at 650°C following an overall 1-step co-electrolytic conversion reaction of the type:
(1) Anode reaction: 4H₂O → 2O₂ + 8H⁺ + 8e⁻
(2) Cathode reaction: CO₂ + 8H⁺ + 8e⁻ → CH₄ + 2H₂O
(3) Overall reaction: CO₂ + 2H₂O → CH₄ + 2O₂

However, as the equilibrium partial pressure of CH₄ is low at 650°C, a part of the CO₂ is converted into CO instead in accordance with the below reaction scheme:
(1a) Anode reaction: 2H₂O → 2O₂ + 4H⁺ + 4e⁻
(2a) Cathode reaction: 2CO₂ + 4H⁺ + 4e⁻ → 2CO + 2H₂O
(3a) Overall reaction: 2CO₂ → 2CO + O₂

It is an aim of the present inventors to improve on these known processes, whereby methane is generated in a one-step process by co-electrolysis of CO₂ and H₂O in accordance with reactions (1)-(3), in particular to improve the conversion rate of methane over carbon monoxide, and to reduce the overall energy loss in the process.

To this aim, and with the present disclosure, the present inventors report a novel one-step electrolytic conversion of CO₂ and H₂O to methane and oxygen in the presence of an electrolyte comprising a superprotonic conducting acid compound in solid or molten form of the general chemical formula (I) MₓH_{y}(AO₄)_{z}, wherein x is 1, 2, or 3; y is 1, 2, 3, 4 or 5; z is 1 or 2; M is at least one of Li, Na, K, Rb, Cs, Tl, NH₄; and A is S, Se, P, As; which method is operative at temperatures down to only slightly above the boiling point of water, but preferably operated at temperatures in the range of from 250 to 450°C, and which method has the further benefit that methane is preferentially produced at the cathode via reactions (1) through (3) rather than carbon monoxide via reactions (1a) through (3a).

The use of a superprotonic conducting acid compound in solid or molten form of the general chemical formula (I) have previously been suggested in the art for use as superprotonic electrolytes in relation to H₂-production for fuel cells, cf. e.g. Goñi-Urtiaga et al., Int. J. Hydrogen Energy, 2012, 37, 3358-3372, wherein the chemistry and suitability of these compounds as superprotonic electrolytes in relation to electrolytic cells are thoroughly discussed.

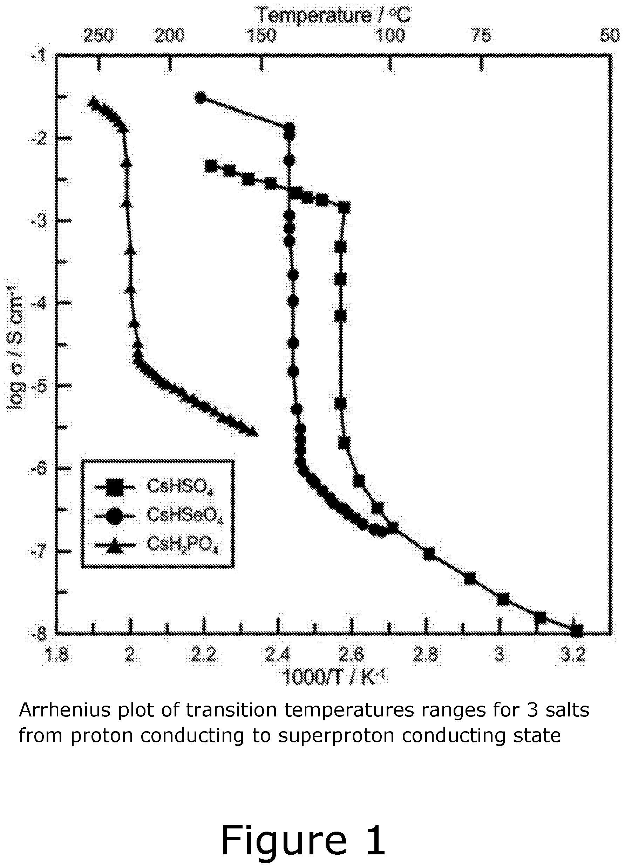

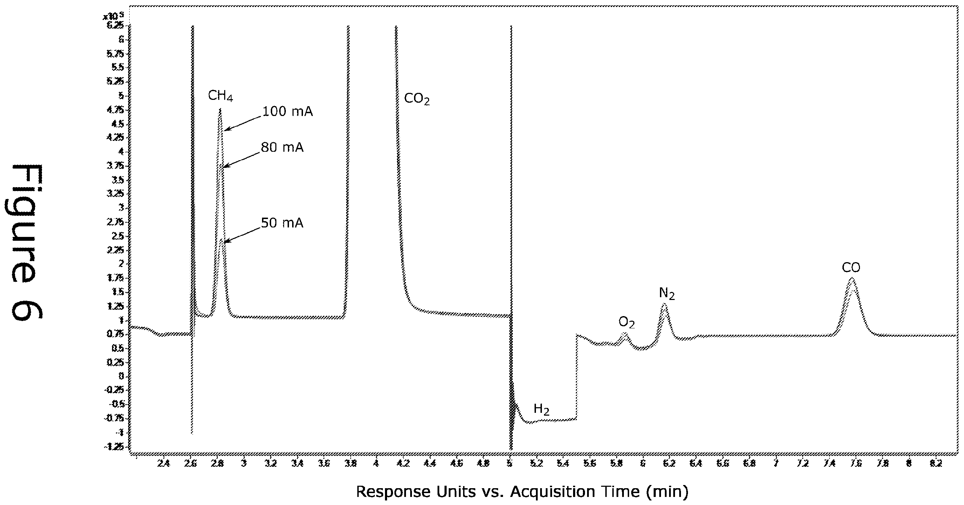

In the context of the present disclosure, and in accordance with the usage in the scientific literature, a superprotonic electrolyte is an electrolyte which, at and above a certain temperature or, usually, at or above a narrowly defined temperature range, exhibits very low resistance to proton conduction. Figure 1 (Figure 6 of Goñi-Urtiaga et al.) displays an Arrhenius plot of the proton conductivity of various Cs-based superprotonic acid compounds suitable for use with the present invention. As can be observed from the figure, resistance to proton conduction in the electrolyte reduces for the three detailed salts by at least 3 decades following a temperature increase by less than 5°C (CsH₂PO₄, from about 230°C to about 235°C) at ambient pressure.

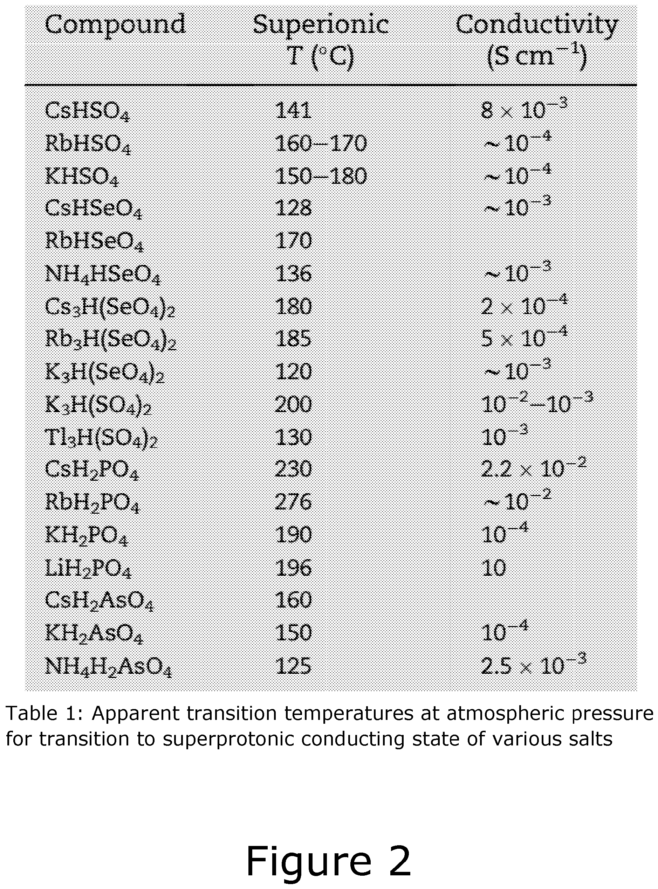

It is as yet not finally established in the scientific literature, whether the transition from protonic conductivity to superprotonic conductivity is a true phase transition, and hence associated with a single well-defined temperature, or not. For CsH₂PO₄, at least, the transition correlates fully with an internal rearranging of the constituent atoms from a monoclinic, *P2₁*/*m* crystal packing to a cubic, *Pm-3m* packing, and hence at least for this compound may constitute a true phase transition. The superprotonic conductivity pertains also into the molten phase of the acid compound, where at an upper, but ill-defined temperature or temperature interval, the molten phase loses superprotonic conductivity due to thermal agitation. As expected from general principles, pressurization of the system influences the temperature of loss of superprotonic conductivity. Table 1 comprises a list displaying apparent transition temperatures for superprotonic conducting acid compound in solid or molten form of the general chemical formula (I) MₓH_{y}(AO₄)_{z} as defined above at atmospheric pressure and their resulting proton conductivity after transition (c.f. Table 1 of Goñi-Urtiaga et al. and Figure 2).

A major problem, as has been repeatedly reported in the literature, in using the acid compounds of formula (I) as superprotonic electrolytes in electrolytic cells is that the acid compounds of formula (I) are inherently instable at elevated temperatures and decompose according to the general stoichiometric equation (4) given below (c.f. Goñi-Urtiaga et al. equation (11)):

(4) MₓH_{y}AO₄ (s) → MH_{y-yx}AO₄₋ₓ (s) + x H₂O (g)

wherein the reaction is driven to the right hand side by the evaporation of gaseous water. Under moist conditions, as is known, the reaction is reversible; however, the presence of moisture in the acid compounds, such as when these are subjected to gaseous water, leads to a loss of superprotonic conductivity. The electrolytic systems comprising acid compounds of the general formula (I) as studied hitherto have been shown to lack long-term stability due to degradation of the acid compound in accordance with reaction (4). However, the present inventors through their work has established that this observation by Goñi-Urtiaga et al. is unbalanced with respect to the metal-ions, M.

Rather, the present inventors observe that a number of the mentioned acid compounds may decompose by stepwise polymerization by condensation and may irreversibly yield compounds of the general formula MₓH_{y-2δ}A_{z}O_{4z-δ} (formed by the reaction MₓH_{y}(AO₄)_{z}(s) → MₓH_{y-2δ}A_{z}O_{4z-δ}(s)+δH₂O(g)) or ultimately MAO₃ as the end product of the dehydration process, which products further are known by the present inventors to restrict the use of the acid compounds contemplated by the present inventors

The present inventors have now surprisingly discovered that by maintaining particular levels of water partial pressures and using "dry", that is non-condensing superheated steam, i.e. superheated steam, which is not saturated with H₂O, the decomposition reactions, can be suppressed and a functional electrolyte maintained. These discoveries have allowed the present inventors to construct an electrolytic cell wherein 1-step methanization of CO₂ is possible without loss of electrolyte activity over time.

The present inventors have found that following the instructions according to the present invention, the results obtainable by the invention are not influenced by the physical state, whether solid or molten, of the acid compounds for use with the invention, as long as these are in their superprotonic conducting state. Likewise, the present inventors have found that although the temperature at which superprotonic conductivity is attained for a given acid compound displays a dependency on the external pressure of the electrolytic system, the general teaching of the present invention is not affected thereby. Rather, it is considered that the skilled person will know how to establish if superprotonic conductivity has been attained at a given combination of temperature and pressure for a given acid compound, e.g. by establishing an Arrhenius-plot in accordance with Figure 1 for the particular combination of acid compound, temperature and pressure, to the extent that the data cannot be obtained from the pertinent prior art.

As will be discussed below, it is in general preferable to operate the electrolytic cell well above a minimum temperature just sufficient to establish superprotonic conductivity for a given combination of acid compound, temperature and pressure to obtain the best results for the invention.

Recently, particular focus has been given to obtaining energy in the form of biogas from reusable sources. A drawback to the production of biogas is that considerable amounts of CO₂ (up to 40% w/w) and some sulfur-containing compounds are byproducts of the biogas-production, but attempts have been made (e.g. WO 2012/003849) to utilize the formed carbon dioxide for electrolytic reforming into syngas. However, as the presented system is vulnerable to sulfur-poisoning of the employed catalysts, and electrolytes, additional steps need to be taken to separate the sulfur-containing compounds from the syngas. Surprisingly, the system presented by the present inventors does not suffer from the above drawback within the timeframe of the performed experimental studies; which makes the electrolytic cell and the associated method of the present invention ideally suited for utilizing biogas as a source of carbon dioxide for one-step methanization.

The solutions to the above technical problems suggested by the present inventors are detailed in the below description and in the claims and are presented with respect to the below discussed definitions of terms and parametric limitations and of the associated figures.

### SUMMARY OF THE INVENTION

In accordance with the invention there is presented herein a method of synthesizing methane by 1-step co-electrolysis of H₂O and CO₂ in the presence of an electrolyte comprising at least one superprotonic conducting acid compound of the general formula (I)
(I) MₓH_{y}(AO₄)_{z}, wherein x is 1, 2, or 3; y is 1, 2, 3, 4 or 5; z is 1 or 2; M is at least one of Li, Na, K, Rb, Cs, Tl, NH₄; and A is S, Se, P, As;
the method comprising: a) providing a pressurized electrolytic cell comprising an anode and a cathode, wherein the electrolyte is arranged between the anode and the cathode; and wherein hydrogen ions are produced at the anode according to an anode reaction (1)

(1) 4H₂O → 2O₂ + 8H⁺ + 8e⁻ ;

and wherein methane is produced at the cathode according to a cathode reaction (2)

(2) CO₂ + 8H⁺ + 8e⁻ → CH₄ + 2H₂O;

the method further comprising operating the electrolytic cell by: b) providing an electrical current applied across the electrolytic cell sufficient to induce anodic and cathodic reactions according to the anode (1) and cathode (2) reactions; c) maintaining the electrolytic cell at an operating water partial pressure from 1 to 30 bar; d) maintaining the electrolytic cell at an operating temperature sufficient to induce superprotonic conduction in the electrolyte of hydrogen ions produced at the anode; e) providing a flow of gaseous H₂O as superheated steam as an anode reactants flow to the anode at a flow rate sufficient to allow the anodic reaction; f) providing a flow of CO₂ as a cathode reactants flow to the cathode at a flow rate sufficient to allow the cathodic reaction; g) collecting a cathode products flow from the cathodic reaction; and h) optionally, isolating methane from the cathode products flow.

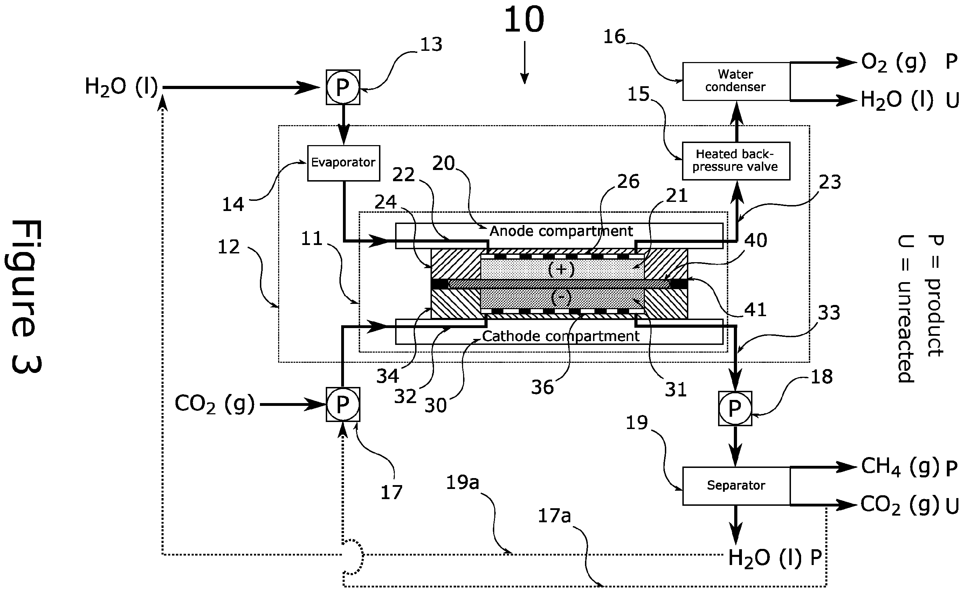

Also, and likewise in accordance with the present invention (cf. Figure 3), there is disclosed an electrolytic cell system (10) comprising an electrolytic cell (11) enclosed in a pressure chamber (12); the electrolytic cell comprising an anode compartment (20) comprising an anode (21) and an insulating anode enclosure (24) wherein the anode is embedded, and a cathode compartment (30) comprising a cathode (31) and an insulating cathode enclosure (34) wherein the cathode is embedded, and an electrolyte (40) arranged in contact with and between the anode (21) and the cathode (31), and wherein the anode compartment (20) and the cathode compartment (30) are separated by the electrolyte (40) and an insulating gasket (41) enclosing the electrolyte; the electrolyte (40) comprising at least one superprotonic conducting acid compound of the general formula (I):
(I) MₓH_{y}(AO₄)_{z}, wherein x is 1, 2, or 3; y is 1, 2, 3, 4 or 5; z is 1 or 2; M is at least one of Li, Na, K, Rb, Cs, Tl, NH₄; and A is S, Se, P, As;
wherein the anode compartment (20) further comprises an anode flow path (22) for gaseous H₂O as superheated steam to the anode (21) arranged for contacting the superheated steam at a water partial pressure of 1 to 30 bar as an anodic reactant with the anode; and an anode products flow path (23) from the anode (21) comprising means (15) for maintaining a constant water partial pressure across the anode; wherein the cathode compartment (30) further comprises a cathode flow path (32) for gaseous CO₂ to the cathode (31) arranged for contacting the CO₂ as a cathodic reactant with the cathode; and a cathode products flow path (33) from the cathode (31), optionally comprising means (19) for isolating methane from a gas flow; the electrolytic cell system (10) further comprising means for circulating an electric current across the electrolytic cell (11), and respective means (13,17,18) for passing a respective gas flow through a respective anode or cathode compartment (20,30).

In the experiments reported herein, the means (19) for isolating methane from a gas flow was implemented, proving the successful production of methane according to the invention.

Further aspects and embodiments of the invention are detailed herein in the description, in the claims and in the figures.

### BRIEF DESCRIPTION OF THE DRAWINGS

- Figure 1:: Arrhenius plot of the proton conductivity of various Cs-based acid compounds suitable for use with the invention.
- Figure 2:: Apparent transition temperature to super-protonic conducting state for various salts.
- Figure 3:: Schematic of the electrolytic cell system of the invention.
- Figure 4:: Measured XRD pattern of CsH₂PO₄ electrolyte with matrix of SnP₂O₇ after co-electrolysis and electrolyte rearrangement and calculated diagrams of three reference compounds.
- Figure 5:: GC-data showing 1-step methanization in KH₂PO₄-electrolyte (dried gas flow).
- Figure 6:: GC-data showing 1-step methanization in CsH₂PO₄-electrolyte (dried gas flow).
- Figure 7:: Polarization of electrolytic cell with CsH₂PO₄-electrolyte at two temperatures.
- Figure 8:: Comparison of polarization of electrolytic cell between KH₂PO₄ and CsH₂PO₄-electrolytes.
- Figure 9:: Voltammetric curves obtained on a Ni electrode in CsH₂PO₄ at 350°C.

### DETAILED DESCRIPTION

In accordance with the invention there is presented herein a method of synthesizing methane by 1-step co-electrolysis of H₂O and CO₂ in the presence of an electrolyte comprising at least one superprotonic conducting acid compound of the general formula (I)
(I) MₓH_{y}(AO₄)_{z}, wherein x is 1, 2, or 3; y is 1, 2, 3, 4 or 5; z is 1 or 2; M is at least one of Li, Na, K, Rb, Cs, Tl, NH₄; and A is S, Se, P, As;
the method comprising: a) providing a pressurized electrolytic cell comprising an anode and a cathode, wherein the electrolyte is arranged between the anode and the cathode; and wherein hydrogen ions are produced at the anode according to an anode reaction (1)

(1) 4H₂O → 2O₂ + 8H⁺ + 8e⁻ ;

and wherein methane is produced at the cathode according to a cathode reaction (2)

(2) CO₂ + 8H⁺ + 8e⁻ → CH₄ + 2H₂O;

the method further comprising operating the electrolytic cell by: b) providing an electrical current applied across the electrolytic cell sufficient to induce anodic and cathodic reactions according to the anode (1) and cathode (2) reactions; c) maintaining the electrolytic cell at an operating water partial pressure from 1 to 30 bar; d) maintaining the electrolytic cell at an operating temperature sufficient to induce superprotonic conduction in the electrolyte of hydrogen ions produced at the anode; e) providing a flow of gaseous H₂O as superheated steam as an anode reactants flow to the anode at a flow rate sufficient to allow the anodic reaction; f) providing a flow of CO₂ as a cathode reactants flow to the cathode at a flow rate sufficient to allow the cathodic reaction; g) collecting a cathode products flow from the cathodic reaction; and h) optionally isolating methane from the cathode products flow.

In one embodiment, also the products of the anodic reaction are collected, preferably as an anode products flow from the anodic reaction.

In one embodiment H₂O, CO₂ are also individually or, respectively, both isolated from the cathode products flow and individually, respectively, both recirculated into the respective flows of anode and/or cathode reactants.

Also, and likewise in accordance with the present invention (cf. Figure 3), there is disclosed an electrolytic cell system (10) comprising an electrolytic cell (11) enclosed in a pressure chamber (12); the electrolytic cell comprising an anode compartment (20) comprising an anode (21) and an insulating anode enclosure (24) wherein the anode is embedded, and a cathode compartment (30) comprising a cathode (31) and an insulating cathode enclosure (34) wherein the cathode is embedded, and an electrolyte (40) arranged in contact with and between the anode (21) and the cathode (31), and wherein the anode compartment (20) and the cathode compartment (30) are separated by the electrolyte (40) and an insulating gasket (41) enclosing the electrolyte; the electrolyte (40) comprising at least one superprotonic conducting acid compound of the general formula (I):
(I) MₓH_{y}(AO₄)_{z}, wherein x is 1, 2, or 3; y is 1, 2, 3, 4 or 5; z is 1 or 2; M is at least one of Li, Na, K, Rb, Cs, Tl, NH₄; and A is S, Se, P, As;
wherein the anode compartment (20) further comprises an anode flow path (22) for gaseous H₂O as superheated steam to the anode (21) arranged for contacting the superheated steam at a water partial pressure of 1 to 30 bar as an anodic reactant with the anode; and an anode products flow path (23) from the anode (21) comprising means (15) for maintaining a constant water partial pressure across the anode; wherein the cathode compartment (30) further comprises a cathode flow path (32) for gaseous CO₂ to the cathode (31) arranged for contacting the CO₂ as a cathodic reactant with the cathode; and a cathode products flow path (33) from the cathode (31), optionally comprising means (19) for isolating methane from a gas flow; the electrolytic cell system (10) further comprising means for circulating an electric current across the electrolytic cell (11), and respective means (13,17,18) for passing a respective gas flow through a respective anode or cathode compartment (20,30). An illustrative embodiment of the electrolytic cell system (10) is disclosed in Figure 3.

In general, and preferably, the means (19) for isolating methane from a gas flow will be included into the electrolytic cell system (10), in order to isolate the methane of the cathodic reaction. Nevertheless, as the products flow following the methods detailed herein is reasonably concentrated in methane, in many situations the products flow from the cathode is directly usable in downstream processes, such as e.g. combustion processes, permitting the omission of the aforesaid means (19).

In the optional embodiment comprising means (19) for isolating methane, preferably the means (19) for isolating methane is connected to the means (13) for passing a gas through an anode compartment (20) via a flow path (19a) for recirculating condensed water produced via reaction (2). In a further embodiment, the means (19) for isolating methane is connected to the means (17) for passing CO₂ through the cathode compartment (20) via a flow path (17a) for recirculating unreacted CO₂ obtained from the means (19) for isolating methane. This is particularly advantageous, as the product stream of unreacted CO₂ often will comprise a quantity of methane, which then rather than being discarded as waste is recycled and recovered in a subsequent pass. At steady state, when recycling via flow path (17a) is enabled, methane recovery is significantly increased.

The electrolytic cell system (10) and electrolytic cell (11) described herein has proven particularly suitable for executing the method of the invention. In some embodiments, the electrolytic cell system (10) further comprises a controller configured to execute a method of the invention and of its embodiments.

The present invention relies on the surprising discovery by the present inventors that the drawback to the prior art use of superprotonic conducting acid compounds of the general formula (I) in electrolytic cells can be overcome, thereby preventing reversible and irreversible conversion of the superprotonic conducting acid compounds to non-superprotonic conducting compounds, by providing and maintaining gaseous H₂O as superheated steam at an operating water partial pressure from 1 to 30 bar across the electrolytic cell during the 1-step co-electrolysis of H₂O and CO₂ to CH₄ and O₂.

The present inventors speculate, without considering themselves bound by this theory, that the surprising dual action of providing and maintaining gaseous H₂O as superheated steam at an operating water partial pressure of from 1 to 30 bar across the electrolytic cell during the 1-step co-electrolysis of H₂O and CO₂ to CH₄ and O₂, is due to a combined effect of the high water partial pressure, which serves to drive reaction (4) to the left, while at the same time the superheated steam (i.e. steam heated to above the condensation point of water in the steam) serves to assure, that water does not condense in the electrolytic cell, thereby preventing irreversible conversion of the electrolyte or unwanted dissolution of the electrolyte.

Preferably, the operating water partial pressure is at least 2 bar, at least 4 bar, at least 6 bar, preferably at least 8 bar, and even more preferably at least 10 bar. For the acid compounds of formula (III) (cf. below), optimally the operating water partial pressure shall be at least 8 bar.

In the electrolytic cell system (10) of the invention, the method of the invention is implemented by providing a water-to-steam evaporator (14) arranged on the anode flow path (22) for providing gaseous H₂O as superheated steam to the anode prior to the electrolytic cell, a means (15) for maintaining a constant water partial pressure across the anode, preferably in the form of a heated backpressure valve, and by operating the electrolytic cell (11) at a temperature which is higher than the temperature of the evaporator (14), thereby creating superheated steam in the electrolytic cell.

In the test cell described below, the operating temperature of the electrolytic cell (11) is about 50% higher than the exit temperature from the water-to-steam evaporator (14). Also the back pressure valve is heated in order to prevent condensation along the entire length of the anode flow paths (22,23). Naturally, superheated steam can in an embodiment be prepared prior to entering the electrolytic cell; and likewise heating to avoid condensation in the backpressure valve (15) or along the anode products flow path (23) can be decoupled from the backpressure valve (15) itself.

The use of an electrolyte comprising at least one superprotonic conducting acid compound of the general formula (I) constitutes an essential element of the present invention. In the absence of such superprotonic conducting acid compounds, the reverse anode reaction dominates and the advantages of the invention cannot be realized.

As stated, the at least one superprotonic conducting acid compound has the general formula (I):
(I) MₓH_{y}(AO₄)_{z}, wherein x is 1, 2, or 3; y is 1, 2, 3, 4 or 5; z is 1 or 2; M is at least one of Li, Na, K, Rb, Cs, Tl, NH₄; and A is S, Se, P, As;

In an embodiment of the invention, there is disclosed a method, wherein the at least one superprotonic conducting acid compound has the general formula (IB):
(IB) MₓH_{y}AO₄; wherein M is Li, Na, K, Rb, Cs, NH₄; A is S, Se, P, As; and x is 1 or 2; y is 1 or 2; and x+y is 2 when A is S or Se and 3 when A is P or As.

In an embodiment of the invention, there is disclosed a method, wherein the at least one superprotonic conducting acid compound has the general formula (II):
(II) MH₂AO₄; wherein M is Li, Na, K, Rb, Cs, NH₄; and A is P, As.

In a further and preferred embodiment of the invention, there is disclosed a method, wherein the superprotonic conducting acid compound has the general formula (III):
(III) MH₂PO₄; wherein M is Li, Na, K, Rb, Cs, NH₄. As documented in the experimental section, the present inventors have obtained very good results for superprotonic conducting acid compounds wherein A is phosphor (P) and M is selected from periodic system group 1 metals, Li, Na, K, Rb, and Cs, or NH₄, in particular for K and Cs. Hence the invention in particular and most preferred relates to a method according to any embodiment, wherein the at least one superprotonic conducting acid compound is either KH₂PO₄ or CsH₂PO₄.

In one embodiment of the invention, the electrolyte comprises a mixture of at least two of the superprotonic conducting acid compounds selected according to any of the above embodiments.

The at least one superprotonic conducting acid compound is either solid, molten or a mixture of solid and molten. As was discussed in the background section above, the superprotonic conducting acids of formulas (I), (IB), (II) and/or (III), in particular KH₂PO₄ or CsH₂PO₄, transit from a non-superprotonic conducting state to a superprotonic conducting state at a relatively narrow region of temperature, potentially even at a single temperature in correspondence with a true phase transition. As mentioned, the superprotonic conductivity pertains also into the molten phase of the acid compound, where at an upper, but ill-defined temperature or temperature interval, the molten phase loses superprotonic conductivity due to thermal agitation and/or decomposition. The present inventors have investigated KH₂PO₄ and CsH₂PO₄ as electrolytes both in solid, in molten and in solid/molten state and found that the invention can be realized over the entire superprotonic conductivity range of these two compounds without discrimination.

In one embodiment, the at least one superprotonic conducting acid compound has the general formula (IV): (IV) MH₅(AO₄)₂; wherein
M is Li, Na, K, Rb, Cs, NH₄; and
A is P, As.

In one embodiment, the at least one superprotonic conducting acid compound has the general formula (V): (V) MH₅(PO₄)₂, wherein M is Li, Na, K, Rb, Cs; NH₄

It has further been found that it is advantageous to include a support material for the at least one superprotonic conducting acid compound into the electrolyte. Accordingly, the invention further relates to a method, wherein the electrolyte further comprises a support material for the at least one superprotonic conducting acid compound.

In one embodiment of the invention, the support material comprises a pyrophosphate compound of the general formula (VI) :
(VI) Mt(P₂O₇), wherein Mt can be Si, Ge or Sn.

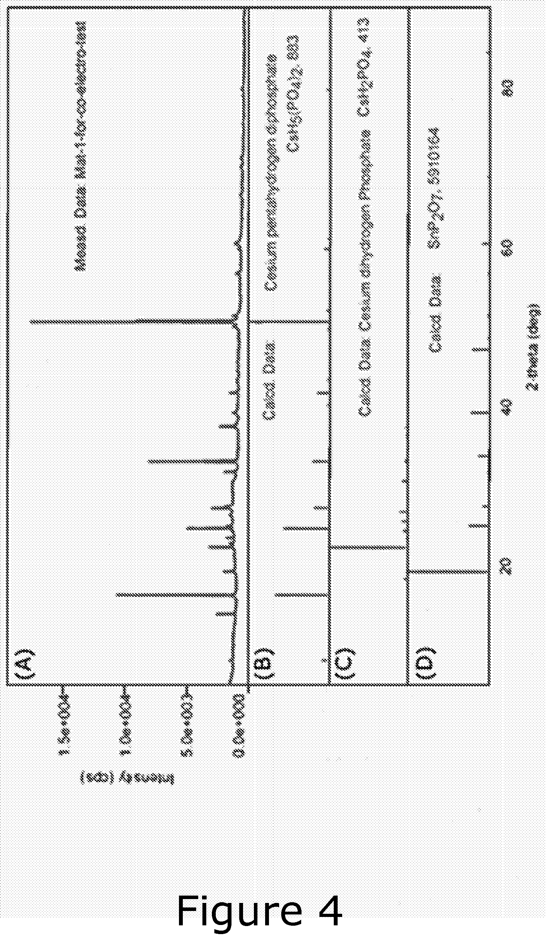

The present inventors have found (cf. Figure 4) that the pyrophosphate compounds according to formula (VI) interact particularly favorably with the compounds of formula (III) and (IV) and, when A is phosphor (P), forming as a subspecies of the compounds of formula (I), the superprotonic conducting diphosphate compounds of the general formula (V). The formed diphosphates are highly stable under the experimental conditions employed while retaining their superprotonic conducting properties as desired.

Particularly suited are compounds of formula (VI) in combination with a polybenzimidazole (PBI) fiber reinforcement layer in the electrolyte. In particular Sn(P₂O₇) or Sn(P₂O₇) reinforced with fibers of polybenzimidazole (PBI) were found to stabilize the compounds of formulas (III), (IV) and (V) and are accordingly preferred. Alternatively, fibers of ZrO₂, SiO₂ and/or SiC were found to be suitable alternatives.

Surprisingly, periodic system group 4 dioxides, TiO₂, ZrO₂, and HfO₂, preferably ZrO₂, were found at least to retard, but (likely) to prevent, the conversion of the phosphates of formula (III) into the diphosphates of formula (V). The effect was observed for the oxides alone or in combination with polybenzimidazole (PBI) fiber reinforcement. In a preferred embodiment of the invention, the addition of at least one of SiO₂, SnO₂, TiO₂, ZrO₂, or HfO₂ to the electrolyte as a support material is contemplated.

In general, and when a support material is present, the overall concentration in the electrolyte of the at least one superprotonic conducting acid compound is at least 10% w/w, at least 20% w/w, at least 30% w/w, at least 40% w/w, at least 50% w/w, at least 60% w/w, at least 70% w/w, at least 80% w/w, or at least 90% w/w based on total electrolyte weight.

In accordance with the invention, hydrogen ions are produced at the anode according to an anode reaction (1)

(1) 4H₂O → 2O₂ + 8H⁺ + 8e⁻ ;

In the art, a range of elements, alloys and substances have been proven to permit electrochemical dissociation of water according to the anode reaction (1), in particular metal oxides. In relation to the present invention, the present inventors have found that oxides of iridium, in particular IrO₂ and/or Ir₂O₃, is/are advantageously comprised in the anode.

In accordance with the invention, methane is produced at the cathode according to a cathode reaction (2)

(2) CO₂ + 8H⁺ + 8e⁻ → CH₄ + 2H₂O;

In the art, a range of elements, alloys and substances have been proven to permit electrochemical association of CO₂ and H⁺ to methane according to the cathode reaction (2).

The inventors have found that both ceramics, such as ceramics comprising at least one of WC, MoC₂ and/or CoB₂ are suitable as cathode material, but in particular it has been found that the cathode should comprise at least one of Ni, alloyed Ni, Co, Ru, Rh, or a combination thereof. Preferably, Ni or alloyed Ni is advantageously comprised in the cathode.

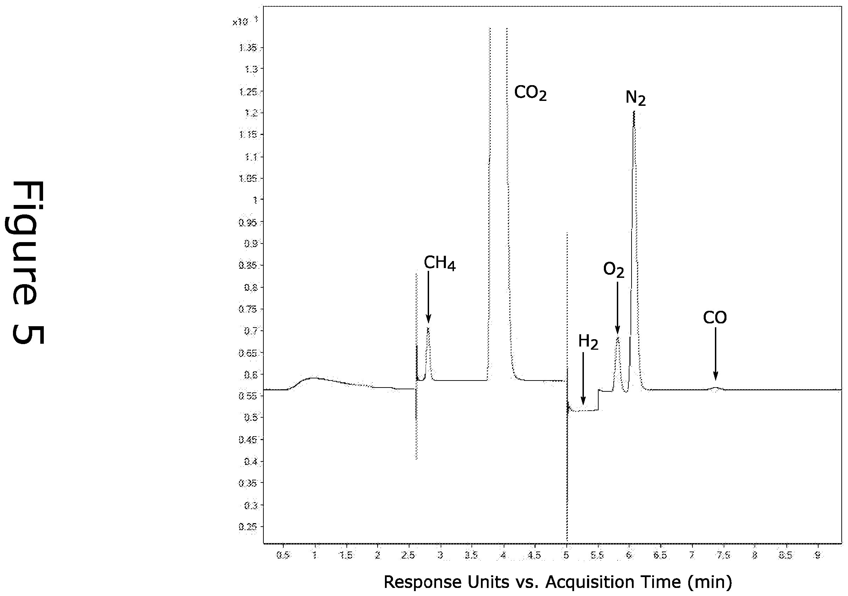

According to the invention, an electrical current applied across the electrolytic cell is provided, which is sufficient to induce anodic and cathodic reactions according to the above-mentioned anode (1) and cathode (2) reactions. As documented in Figures 5-8, the electrical current applied across the electrolytic cell (11) used in the experiments and sufficient to induce anodic and cathodic reactions according to the anode (1) and cathode reactions (2) should be at least 5 mA/cm², at least 10 mA/cm², at least 20 mA/cm², at least 25 mA/cm², at least 30 mA/cm², preferably at least 40 mA/cm², preferably at least 50 mA/cm², more preferably at least 80 mA/cm², and even more preferably at least 100 mA/cm².

Preferably, the operating water partial pressure is at least 2 bar, at least 4 bar, at least 6 bar, preferably at least 8 bar, at least 10 bar, at least 15 bar, at least 20 bar, and even more preferably at least 25 bar. For the acid compounds of formula (III), the operating water partial pressure optimally shall be at least 8 bar. In a particularly preferred embodiment, the operating water partial pressure is from 8 to 25 bar, preferably from 10 to 20 bar, and even more preferably from 20 to 25 bar.

The present inventors have observed that while it is possible to produce CH₄ while maintaining the electrolytic cell at a minimum operating temperature just sufficient to induce superprotonic conduction in the electrolyte of hydrogen ions produced at the anode, it is preferable to operate the electrolytic cell at a temperature at least 50°C above the same minimum operating temperature.

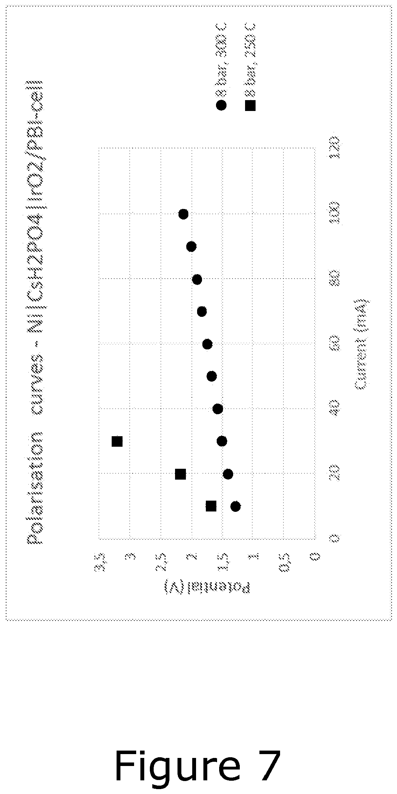

This effect is e.g. visible in Figure 7, wherein an electrolytic cell operating temperature of 250°C (squares) about 15°C above the narrow transition interval for CsH₂PO₄ from non-superprotonic to superprotonic conduction of between 230-235°C, exhibits considerable polarization of the electrodes with a strong dependency on the current, whereas raising the temperature to 300°C (circles) lowers the polarization considerably and nearly eliminates the dependency of the same polarization on the current.

Preferably, the operating temperature is at least 25°C, at least 50°C, at least 75°C, at least 100°C, at least 125°C, preferably at least 150°C and most preferably at least 175°C above the same minimum operating temperature, which is just sufficient to induce superprotonic conduction in the electrolyte of hydrogen ions produced at the anode. For the compounds of formula (III), in particular for KH₂PO₄ and CsH₂PO₄, the optimal temperature range is from at least 275°C, from at least 320°C, or from at least 340°C to 400°C corresponding to from about 50°C to 175°C above the transition temperature from non-superprotonic to superprotonic conduction for these compounds.

Contrary to this, the present inventors have not observed a negative effect of approaching the upper temperature or temperature range) at which a given acid compound exhibits superprotonic conductivity, as long as the upper temperature (or temperature range) is not exceeded. Rather the rate of reaction for the formation of methane is increased.

Suitable flowrates for the gasses used in the reactions are from 1 ml/min/cm² to 25 ml/min/cm² based on the size of the electrode. Preferably, the flowrates for the gasses used shall be from 2 ml/min/cm² to 20 ml/min/cm², from 3 ml/min/cm² to 15 ml/min/cm², from 5 ml/min/cm² to 12.5 ml/min/cm², or, from 7.5 ml/min/cm² to 10 ml/min/cm².

In preferred embodiments of method according to the invention, the anode and/or the cathode reactant flow is/are supplied to the electrolytic cell at a pressure of at least 50% of the operating water partial pressure and at a temperature lower by 50°C than the aforementioned operating temperature with the proviso that pressure and temperature must be sufficient to allow water to be present as steam. The advantage of supplying, in particular the water, at a lower temperature and pressure to the electrolytic cell is that, with the increase in temperature inside the cell, superheating of the steam is assured and water condensation is prevented.

Carbon dioxide for use in the method is readily available from many sources; however, it is preferably that the source of carbon dioxide is a source of high concentration carbon dioxide, such as e.g. the exhaust from a fossil fuel fired power plant, a production site for cement, or a production site for biogas. In one embodiment, it is preferred that the source providing the flow of CO₂ as a cathode reactants flow shall be a flow of carbon dioxide obtained from biogas. In another embodiment, it is preferred that the source of carbon dioxide is a cement plant. In one embodiment it is preferred that the source of electrical energy is a wind plant, in another embodiment it is preferred that the source of electrical energy is a hydro-electrical plant, electrical energy from solar cells, or combinations thereof.

In an embodiment, wherein the source of carbon dioxide comprises a sulfuric content, the method further comprises to cease providing a flow of anode and cathode reactants, while the electrolytic cell is subjected to heating, flushing with an inert gas stream, and a reverse current for removing sulfuric compounds deposited during methane production in the electrolytic cell.

According to the invention, an anode products flow is can be collected from the anode, and a cathode products flow can be collected from the cathode. Methane can then be isolated from the cathode products flow in a final process step, particularly isolated from a cathode products flow comprising methane, unreacted CO₂ and small amounts of formed H₂O and/or CO. The invention does not rely on a specific means of methane isolation, but generally considers the isolation of methane from a gas flow within the common general knowledge of the skilled person. The present inventors have found that when the process of the invention is conducted with sufficient skill following the directions of the present disclosure, only little CO is formed and the majority of CO₂ is consumed, such that the isolation of methane mostly consists in condensation of formed water. In the inventors' experiments, a gas-chromatography-column was fully sufficient for completely separating methane from the further gaseous components of the product flow.

Referring now to Figure 3, wherein an illustrative embodiment of the electrolytic cell system (10) is disclosed:
An electrolytic cell system (10) comprising an electrolytic cell (11) enclosed in a pressure chamber (12); the electrolytic cell comprising an anode compartment (20) comprising an anode (21) and an insulating anode enclosure (24) wherein the anode is embedded, and a cathode compartment (30) comprising a cathode (31) and an insulating cathode enclosure (34) wherein the cathode is embedded, and an electrolyte (40) arranged in contact with and between the anode (21) and the cathode (31), and wherein the anode compartment (20) and the cathode compartment (30) are separated by the electrolyte (40) and an insulating gasket (41) enclosing the electrolyte; the electrolyte (40) comprising at least one superprotonic conducting acid compound of the general formula (I):
(I) MₓH_{y}(AO₄)_{z}, wherein x is 1, 2, or 3; y is 1, 2, 3, 4 or 5; z is 1 or 2; M is at least one of Li, Na, K, Rb, Cs, Tl, NH₄; and A is S, Se, P, As;
wherein the anode compartment (20) further comprises an anode flow path (22) for gaseous H₂O as superheated steam at a water partial pressure of 1 to 30 bar to the anode (21) arranged for contacting the superheated steam as an anodic reactant with the anode; and an anode products flow path (23) from the anode (21) comprising means (15) for maintaining a constant water partial pressure across the anode; wherein the cathode compartment (30) further comprises a cathode flow path (32) for gaseous CO₂ to the cathode (31) arranged for contacting the CO₂ as a cathodic reactant with the cathode; and a cathode products flow path (33) from the cathode (31), optionally comprising means (19) for isolating methane from a gas flow; the electrolytic cell system (10) further comprising means for circulating an electric current across the electrolytic cell (11), and respective means (13,17,18) for passing a respective gas flow through a respective anode or cathode compartment (20,30). As discussed, when present the means (19) for isolating methane is preferably connected to the means (13) for passing a gas through an anode compartment (20) via a flow path (19a) for recirculating condensed water produced via reaction (2). Also preferably, the means (19) for isolating methane is connected to the means (17) for passing CO₂ through the cathode compartment (20) via a flow path (17a) for recirculating unreacted CO₂ obtained from the means (19) for isolating methane.

In accordance with the invention, the electrolytic cell system (10) comprises an electrolytic cell (11) enclosed in a pressure chamber (12). In one embodiment, only the electrolytic cell (11) is enclosed in the pressure chamber, in other embodiments, the pressure chamber (12) may enclose further elements of the electrolytic cell system. In one embodiment, the pressure chamber (12) encloses the further components of the electrolytic cell system fully. This e.g. can be realized by placing the elements comprised in the electrolytic cell system (10) inside an autoclave, which allows external pressure control over the entire electrolytic cell system. In this manner, a transportable electrolytic cell system can be provided.

In accordance with the invention, the electrolytic cell (11) comprises an anode compartment (20) comprising an anode (21) and an insulating anode enclosure (24) wherein the anode is embedded; and a cathode compartment (30) comprising a cathode (31) and an insulating cathode enclosure (34) wherein the cathode is embedded; and an electrolyte (40) arranged in contact with and between the anode (21) and the cathode (31); and wherein the anode compartment (20) and the cathode compartment (30) are separated by the electrolyte (40) and an insulating gasket (41) enclosing the electrolyte. Thereby an electrically insulated cell (11) is provided.

Preferably, the electrically insulated cell (11) can be assembled and disassembled to allow access to the components of the cell between productions according to the methods of the invention.

In an embodiment, the anode compartment (20) and the cathode compartment (30) can be manufactured from stainless steel, alloys of copper and aluminum, or brass. The compartments (20,30) preferably are manufactured from the same material for improved seal and temperature response, and can be provided, in embodiments, with through passages for insulated bolts or screw threads for securing a tight connection between the compartments during production according to the methods of the invention. E.g., improvements to the connection were achieved between the experiments detailed in Figures 5 and 6, by using the above embodiments, thus allowing for reducing the contribution of atmospheric air to the measured product flow.

In accordance with the invention, the electrolyte (40) comprises at least one superprotonic conducting acid compound of the general formula (I):
(I) MₓH_{y}(AO₄)_{z}, wherein x is 1, 2, or 3; y is 1, 2, 3, 4, or 5; z is 1 or 2; M is at least one of Li, Na, K, Rb, Cs, Tl, NH₄; and A is S, Se, P, As;
or of formulas (IB), (II), (III) and/or (V), as detailed above with regards to the methods of the invention in general.

In order to provide a flow of gaseous H₂O as superheated steam to the anode (21), the anode compartment (20) further comprises an anode flow path (22) for gaseous H₂O as superheated steam to the anode (21) arranged for contacting the superheated steam as an anodic reactant with the anode. It is preferable to maximize the contact of the superheated steam with the electrolyte (40), which can e.g. be effectuated as detailed below, by providing the anode in the form of a powder, preferably embedded in a meandering flow path (26) for the steam, whereby steam contact to the anode (21) is also maximized and steam contact to the electrolyte (40) is minimized such that the protons from the water can be absorbed in the electrolyte and the electrons transferred to the anode and the oxygen liberated. Thereby the risk of irreversible conversion of the electrolyte to a non-superprotonic conducting salt is reduced.

Also in accordance with the electrolytic cell system (10) of the invention, the cathode compartment (30) further comprises a cathode flow path (32) for providing gaseous CO₂ or a CO₂ containing gas stream to the cathode (31) arranged for contacting the CO₂ as a cathodic reactant with the cathode; preferably by contacting the CO₂ with the electrolyte (40) to pick up the protons of reaction (2) and the cathode (31) to let the cathode products comprising mostly methane and water free to enter into the cathode flow path (33). The cathode products flow path (33) from the cathode (31) optionally comprises means (19) for isolating methane from a gas flow. As mentioned, the invention does not rely on a specific means (19) of methane isolation, but generally considers the isolation of methane from a gas flow within the common general knowledge of the skilled person. In the inventors' experiments, a gas-chromatography-column was fully sufficient for completely separating methane from the further gaseous components of the product flow.

Accordingly, in preferred embodiments of the invention, the anode and/or the cathode is/are a powder. By providing the anode and/or the cathode as a powder, the contact surface between conversion gas and the electrodes is increased and conversion improved.

Further, and for facilitating the use of powder electrodes, the electrolytic cell (11) in some, preferred embodiments comprises at least one respective anodic and/or cathodic meandering flow path (26,36) arranged respectively in the anode (20) or the cathode (30) compartment in contact with a respective anode (21) or cathode (22) for increasing a residence time of a respective anodic or cathodic reactant at a respective anode or cathode.

It was found that the meandering flow paths (26,36) suitably could be manufactured in stainless steel, in particular in stainless steel coated with metal oxides wherein the metal of the coating metal oxides suitably are selected from periodic table groups 4, 5 or 6, preferably wherein the metal is selected from periodic table group 5, and most preferably wherein the stainless steel is coated with a layer of tantalum and tantalum oxide.

A particularly important aspect of the electrolytic cell system (10) of the invention is, as previously described, that the anode products flow path (23) from the anode (21) shall comprise suitable means (15) for maintaining a constant water partial pressure across the anode. The present inventors have found the maintenance of a constant water partial pressure across the electrolytic cell (11) essential for the long-term stability of the electrolyte without which, the 1-step methanization reaction of the invention rapidly ceases to function due to irreversible decomposition of the electrolyte. In one embodiment of the electrolytic cell system (10) according to embodiments of the invention, the means (15) for maintaining a constant water partial pressure across the anode (21) is a backpressure valve (15), preferably a heated backpressure valve (15) to avoid water condensation in the valve.

Further, and for providing a functioning electrolytic cell system (10), the electrolytic cell system (10) comprises means for circulating an electric current across the electrolytic cell (11), and means (13,17,18) for passing a respective gas flow through a respective anode or cathode compartment (20,30), such means (13,17,18) typically being pumps or fans.

In one embodiment, the electrolytic cell system (10) according to embodiments of the invention further comprises a water-to-steam evaporator (14) arranged on the anode flow path (22) for providing gaseous H₂O as superheated steam to the anode.

In one embodiment, the electrolytic cell system (10) according to embodiments of the invention further comprises a water condenser (16) arranged on the anode products flow path (23) after the means (15) for maintaining a constant water partial pressure across the anode (21).

In one embodiment, the electrolytic cell system (10) according to embodiments of the invention, the electrolyte further comprises a support material for the at least one superprotonic conducting acid compound.

In one embodiment, the electrolytic cell system (10) according to embodiments of the invention, the support material comprises a pyrophosphate compound of the general formula (VI):

(VI) Mt(P₂O₇),

wherein Mt can be Si, Ge, or Sn;
alone or in combination with a polybenzimidazole (PBI) fiber reinforcement.

In one embodiment, the electrolytic cell system (10) according to embodiments of the invention, the support material is a either Sn(P₂O₇) or Sn(P₂O₇) with a polybenzimidazole (PBI) fiber reinforcement.

In one embodiment, the electrolytic cell system (10) according to embodiments of the invention, the anode comprises at least one oxide of iridium, preferably IrO₂ and/or Ir₂O₃.

In one embodiment, the electrolytic cell system (10) according to embodiments of the invention, the cathode comprises at least one of Ni, alloyed Ni, Co, Ru, Rh, or a combination thereof, preferably Ni.

In one embodiment, the electrolytic cell system (10) according to embodiments of the invention, the anode and/or the cathode is/are a powder.

In one embodiment, the electrolytic cell system (10) according to embodiments of the invention, the at least one superprotonic conducting acid compound is selected from at least one of a superprotonic conducting acid compound according to at least one of the general formulas (IB), (II), (III), (IV) or (V).

In one embodiment, the electrolytic cell system (10) according to embodiments of the invention, the electrolytic cell system (10) further comprises a controller for executing a method according to any of the herein detailed aspects and embodiments.

Disclosed, but not part of the invention, is the use of a superprotonic conducting acid compound of the general formula (I):
(I) MₓH_{y}(AO₄)_{z}, wherein
   x is 1, 2, or 3;
   y is 1, 2, 3, 4, or 5;
   z is 1 or 2;
   M is at least one of Li, Na, K, Rb, Cs, Tl, NH₄;
   and A is S, Se, P, As;
as an electrolyte in a 1-step co-electrolytic conversion of H₂O and CO₂ to O₂ and CH₄.

Also disclosed herein, but not part of the invention, are the uses of compounds of formulas (IB), (II), (III), (IV), and/or (V) as an electrolyte in a 1-step co-electrolytic conversion of H₂O and CO₂ to O₂ and CH₄.

### EXAMPLES

### Example 1:

X-ray diffractogram showing evidence of almost complete conversion of CsH₂PO₄ into CsH₅(PO₄)₂ in the electrolyte in the presence of SnP₂O₇, cf. Figure 4. Topmost spectrum (A): measured data. Lower three spectra (B)-(D) calculated diffractograms corresponding to respectively (B): CsH₅(PO₄)₂; (C): CsH₂PO₄; and (D): SnP₂O₇. In particular the almost complete absence of the dominant 2θ-peaks for CsH₂PO₄; and SnP₂O₇, at respectively 22° and 19°, compared to the presence of all major and minor diffraction peaks for CsH₅(PO₄)₂ is noteworthy and strongly indicative of near complete conversion.

### Example 2:

KH₂PO₄-SnP₂O₇ (pellet) with Ni-pellet cathode, IrO₂-pellet anode. No meandering flow pattern, 8 bar operating water partial pressure, 320°C, 40 mA/cm², electrolytic cell electrode diameter 1.26 mm. Gas-chromatographic (GC) detection (c.f. Figure 5) confirmed by Raman spectroscopy. Figure showing enlarged CO-region compared to CH₄-region.

Direct, 1-step electrolytic conversion of CO₂ to CH₄ is confirmed with hardly any conversion of CO₂ into CO. Full consumption of H⁺ as witnessed by absence of H₂ within the detection sensitivity of the GC. Proportion of O₂ and N₂ matches atmospheric proportion consistent with these two molecules being inactive in the conversion process.

### Example 3:

CsH₂PO₄-SnP₂O₇ (pellet) with Ni-pellet cathode, IrO₂-pellet anode. No meandering flow pattern, 8 bar operating water partial pressure, 320°C, 50, 80 and 100 mA/cm², electrolytic cell electrode diameter 1.26 mm. Gas-chromatography detection (cf. Figure 6) confirmed by Raman spectroscopy. Figure showing enlarged CO-region compared to CH₄-region.

Direct, 1-step electrolytic conversion of CO₂ to CH₄ is confirmed with hardly any conversion of CO₂ into CO. Observed increase of CH₄-production with increasing current. Also, increase in CO, N₂ and O₂ with increasing current. Full consumption of H⁺ as witnessed by absence of H₂ within the detection sensitivity of the GC. Proportion of O₂ and N₂ matches atmospheric proportion consistent with these two molecules being inactive in the conversion process. Reduction in levels of O₂ and N₂ compared to Example 1 due to improved seal.

### Example 4:

Polarization curves for a Ni|CsH₂PO₄/PBI|IrO₂-electrolytic cell, (No meandering flow pattern, 8 bar operating water partial pressure, electrolytic cell electrode diameter 1.26 mm) in dependence of current at respectively 250°C (squares, 3 data points) and 300°C (circles, 10 data points), cf. Figure 7. Generally, the lowest possible polarization potentials are desirable, and hence operating at 300°C rather than 250°C is preferable for the exemplified system.

### Example 5:

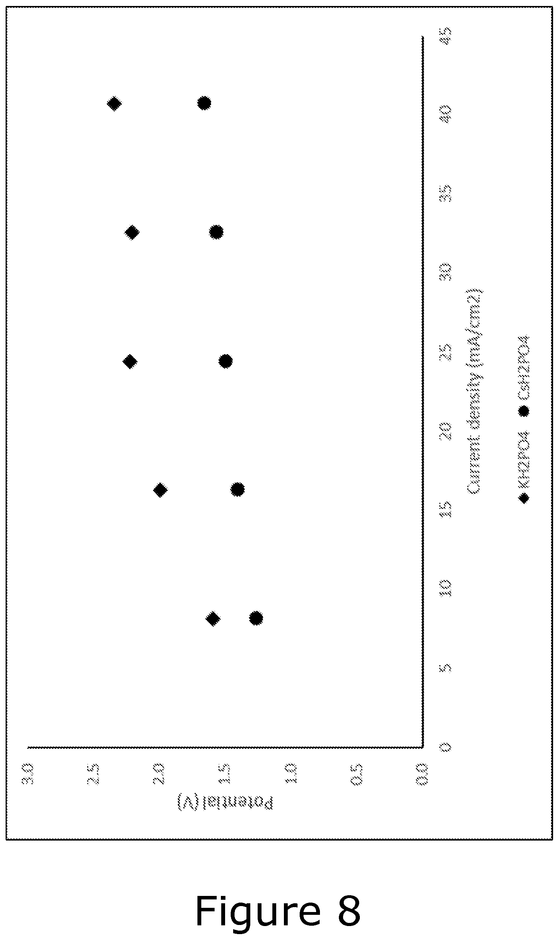

Comparison of KH₂PO₄-SnP₂O₇ and CsH₂PO₄-SnP₂O₇ electrolytes (pellets), electrolytic cell electrode diameter 1.26 mm, Ni-pellet cathode, IrO₂-pellet anode. No meandering flow pattern, 8 bar operating water partial pressure, 320°C, cf. Figure 8.

The experiments indicate that electrolytes comprising the higher atomic number metals in formula (I) are more efficient as electrolytes than the lower atomic number metals, wherefore in one embodiment, K, Cs, and Rb are preferred over Li, Na, and NH₄.

### Example 6:

In an experiment following a production run using a carbon dioxide source from biogas which comprised sulfides, it was tested if the electrodes and electrolyte (CsH₂PO₄ and SnP₂O₇) could be restored to initial capacity without contamination with sulfuric compounds. 10 mA/cm², anode/cathode-switch (counter current) for 15 min at 400°C, was found to restore the system for the tested electrolytic cell, electrode diameter 1.26 mm.

### Example 7:

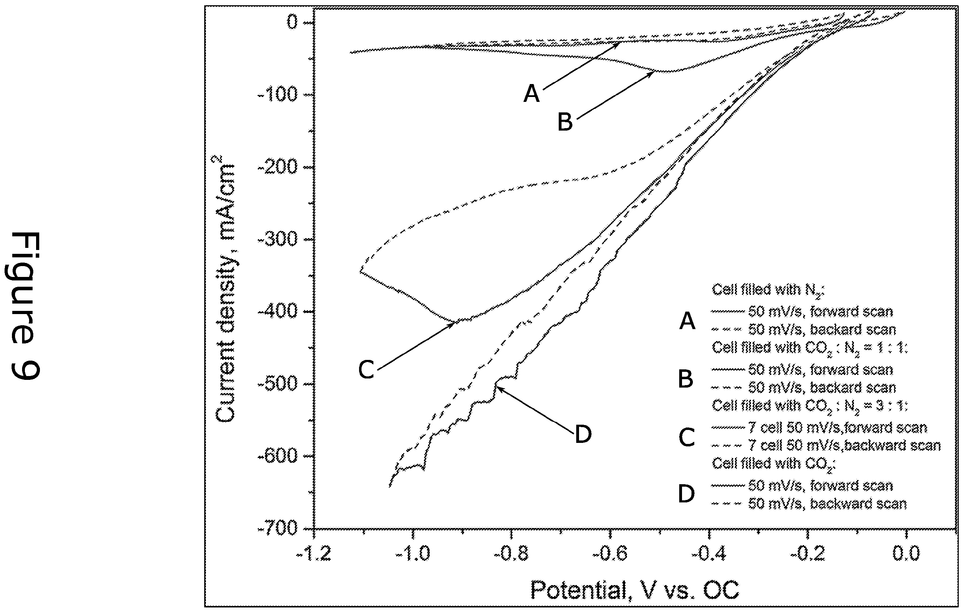

In an experiment (Figure 9) the hypothesis of a 1-step methanization mechanism was tested using voltammetry. Generally, the main features of an electrochemical reaction are: 1) It takes place at the interface between electronic (electrode) and ionic conductor (electrolyte), wherein this interface is called an electric double layer (EDL). 2) The oxidation and reduction parts of the electrochemical reaction are physically separated. 3) The electrons are the participants of electrochemical reaction and cross the EDL during the reaction (electron transfer). 4) The main characteristics of the electrochemical reaction are current (the reaction rate) and potential (defines the activation energy barrier of the reaction).

Commonly, electrochemical reactions have more complicated mechanisms than simple electron transfer. The mechanisms of an electrochemical reaction can include chemical steps, adsorption steps etc. taking place at the same electrode.

In the present invention, it is speculated that the electrochemical reaction has a mechanism with an immediately following chemical reaction at the same electrode (EC mechanism). This hypothesis was tested by the present inventors using voltammetry.

In voltammetry, electrochemical reactions are studied at one electrode. During the measurement, the potential of the electrode is changed linearly with time, and the current response is measured. The results are presented in the form of current-potential plot. Each peak on this plot is conclusive of an electrochemical reaction.

The results obtained for negative polarization at Ni electrode in molten CsH₂PO₄ in the N₂, N₂-CO₂ (1:1); N₂-CO₂ (1:3) and CO₂ atmospheres at 350°C are given in Figure 9.

Weak electrochemical activity can be seen in pure nitrogen atmosphere. There is a reduction wave with maximum at - 0.4V. The only electrochemically active compound in this system is water, which can be electrochemically reduced according to the reaction (2). It can be seen from Figure 1, that the result of the addition of CO₂ is a dramatic increase of the reduction current, i.e. acceleration of the electrochemical reaction. This fact can be explained by an EC mechanism of the electrochemical reaction. Moreover, in chemical reaction (3) water is produced; which is the reactant in electrochemical reaction (2). As this is a catalytic EC mechanism, this can be the reason of the electrochemical reaction acceleration in presence of CO₂. It can be also seen, that the initial reaction potential moves in positive direction when CO₂ is introduced into the system, which means that less energy is spent for polarization of the electrode. After the electrochemical experiment, the gaseous part of the electrochemical cell has been analyzed using Raman spectroscopy and methane was found to be present as one of the gaseous products.

In conclusion, the present investigation showed that methane is produced in a single electrochemical process step. Moreover, this process is sufficiently accelerated by CO₂ because of the catalytic nature of the EC electrochemical reaction. Furthermore, the reaction potential becomes considerably more positive when CO₂ is introduced into the system. These facts show the presence of a one-step methane formation process (the present invention); which is more energy efficient than the two-step processes hitherto known.

### CLOSING COMMENTS

The term "comprising" as used in the claims does not exclude other elements or steps. The term "a" or "an" as used in the claims does not exclude a plurality. A single processor or other unit may fulfill the functions of several means recited in the claims.

## Claims

1. A method of synthesizing methane by 1-step co-electrolysis of H₂O and CO₂ in the presence of an electrolyte comprising at least one superprotonic conducting acid compound of the general formula (I)
(I) MₓH_{y}(AO₄)_{z}, wherein
x is 1, 2, or 3;
y is 1, 2, 3, 4 or 5;
z is 1 or 2;
M is at least one of Li, Na, K, Rb, Cs, Tl, NH₄; and A is S, Se, P, As;
said method comprising:
a) providing a pressurized electrolytic cell comprising an anode and a cathode, wherein said electrolyte is arranged between said anode and said cathode; and wherein hydrogen ions are produced at said anode according to an anode reaction (1)
(1) 4H₂O → 2O₂ + 8H⁺ + 8e⁻ ;
and
wherein methane is produced at said cathode according to a cathode reaction (2)
(2) CO₂ + 8H⁺ + 8e⁻ → CH₄ + 2H₂O;
said method further comprising operating said electrolytic cell by:
b) providing an electrical current applied across said electrolytic cell sufficient to induce anodic and cathodic reactions according to said anode (1) and cathode reactions (2);
c) maintaining said electrolytic cell at an operating water partial pressure from 1 to 30 bar;
d) maintaining said electrolytic cell at an operating temperature sufficient to induce superprotonic conduction in said electrolyte of hydrogen ions produced at said anode;
e) providing a flow of gaseous H₂O as superheated steam as an anode reactants flow to said anode at a flow rate sufficient to allow said anodic reaction;
f) providing a flow of gaseous CO₂ as a cathode reactants flow to said cathode at a flow rate sufficient to allow said cathodic reaction;
g) collecting a cathode products flow from said cathodic reaction; and
h) optionally, isolating methane from said cathode products flow.

2. A method according to claim 1, further comprising:
i) collecting an anode products flow from said anodic reaction.

3. A method according to either claim 1 or 2, wherein said at least one superprotonic conducting acid compound has the general formula (IB):
(IB) MₓH_{y}AO₄; wherein;
M is Li, Na, K, Rb, Cs, NH₄;
A is S, Se, P, As;
x is 1 or 2;
y is 1 or 2; and
x+y is 2 when A is S or Se, and 3 when A is P or As.

4. A method according to any of the preceding claims, wherein said superprotonic conducting acid compound has the general formula (III):
(III) MH₂PO₄; wherein
M is Li, Na, K, Rb, Cs, NH₄.

5. A method according to any of the preceding claims, wherein said at least one superprotonic conducting acid compound is either KH₂PO₄ or CsH₂PO₄.

6. A method according to either claim 1 or 2, wherein said at least one superprotonic conducting acid compound is either KH₅(PO₄)₂ or CsH₅(PO₄)₂.

7. A method according to any of the preceding claims, wherein said electrolyte comprises a mixture of at least two of said superprotonic conducting acid compounds.

8. A method according to any of the preceding claims, wherein said electrolyte further comprises a support material for said at least one superprotonic conducting acid compound and
wherein said support material comprises a pyrophosphate compound of the general formula (VI):
(VI) Mt(P₂O₇), wherein Mt can be Si, Ge, or Sn;
alone or in combination with a polybenzimidazole (PBI) fiber reinforcement.

9. A method according to claim 8, wherein said support material is a either Sn(P₂O₇) or Sn(P₂O₇) with a polybenzimidazole (PBI) fiber reinforcement.

10. A method according to any of the preceding claims, wherein said anode comprises at least one oxide of iridium, preferably IrO₂ and/or Ir₂O₃.

11. An electrolytic cell system (10) comprising an electrolytic cell (11) enclosed in a pressure chamber (12); said electrolytic cell comprising an anode compartment (20) comprising an anode (21) and an insulating anode enclosure (24) wherein said anode is embedded, and a cathode compartment (30) comprising a cathode (31) and an insulating cathode enclosure (34) wherein said cathode is embedded, and an electrolyte (40) arranged in contact with and between said anode (21) and said cathode (31), and wherein said anode compartment (20) and said cathode compartment (30) are separated by said electrolyte (40) and an insulating gasket (41) enclosing said electrolyte; said electrolyte (40) comprising at least one superprotonic conducting acid compound of the general formula (I):
(I) MₓH_{y}(AO₄)_{z}, wherein
x is 1, 2, or 3;
y is 1, 2, 3, 4 or 5;
z is 1 or 2;
M is at least one of Li, Na, K, Rb, Cs, Tl, NH₄; and A is S, Se, P, As;
wherein said anode compartment (20) further comprises an anode flow path (22) for gaseous H₂O as superheated steam to said anode (21) arranged for contacting said superheated steam at a water partial pressure of 1 to 30 bar as an anodic reactant with said anode; and an anode products flow path (23) from said anode (21) comprising means (15) for maintaining a constant water partial pressure across said anode;
wherein said cathode compartment (30) further comprises a cathode flow path (32) for gaseous CO₂ to said cathode (31) arranged for contacting said CO₂ as a cathodic reactant with said cathode; and a cathode products flow path (33) from said cathode (31), optionally comprising means (19) for isolating methane from a gas flow;
said electrolytic cell system (10) further comprising means for circulating an electric current across said electrolytic cell (11), and respective means (13,17,18) for passing a respective gas flow through a respective anode or cathode compartment (20,30).

12. An electrolytic cell system (10) according to claim 11, the system further comprising at least one respective anodic and/or cathodic meandering flow path (26,36) arranged in contact with a respective anode (21) or cathode (22) for increasing a residence time of a respective anodic or cathodic reactant at a said respective anode or cathode.

13. An electrolytic cell system (10) according to claim 11 or 12, the system further comprising a water-to-steam evaporator (14) arranged on said anode flow path (22) for providing gaseous H₂O as superheated steam to said anode.

14. An electrolytic cell system (10) according to any of the claims 11 to 13, the system further comprising a water condenser (16) arranged on said anode products flow path (23) after said means (15) for maintaining a constant water partial pressure across said anode (21) .

15. An electrolytic cell system (10) according to any of the claims 11 to 14, wherein said at least one superprotonic conducting acid compound is selected from at least one of a superprotonic conducting acid compound according to at least one of the general formulas:
(IB): MₓH_{y}AO₄; wherein M is Li, Na, K, Rb, Cs, NH₄; A is S, Se, P, As; x is 1 or 2; y is 1 or 2; and x+y is 2 when A is S or Se, and 3 when A is P or As;
(III) : MH₂PO₄; wherein M is Li, Na, K, Rb, Cs, NH₄;
(V): MH₅(PO₄)₂; wherein M is Li, Na, K, Rb, Cs, NH₄.

## Patentansprüche

1. Verfahren zum Synthetisieren von Methan durch 1-stufige Co-Elektrolyse von H₂O und CO₂ in Anwesenheit eines Elektrolyten umfassend mindestens eine superprotonisch leitende Säureverbindung der allgemeinen Formel (I)
(I) MₓH_{y}(AO₄)_{z}, wobei
x für 1, 2 oder 3 steht;
y für 1, 2, 3, 4 oder 5 steht;
z für 1 oder 2 steht;
M für zumindest eines von Li, Na, K, Rb, Cs, Tl, NH₄ steht; und A für S, Se, P, As steht;
wobei das Verfahren umfasst:
a) Bereitstellen einer unter Druck gesetzten Elektrolysezelle umfassend ine Anode und eine Kathode, wobei der Elektrolyt zwischen der Anode und der Kathode angeordnet ist; und wobei Wasserstoffionen gemäß einer Anodenreaktion (1) an der Anode erzeugt werden
(1) 4H₂O → 2O₂ + 8H⁺ + 8e⁻;
und wobei Methan gemäß einer Kathodenreaktion (2) an der Kathode erzeugt wird
(2) CO₂ + 8H⁺ + 8e⁻ → CH₄ + 2H₂O;
wobei das Verfahren ferner das Bedienen der Elektrolysezelle durch Folgendes umfasst:
b) Bereitstellen eines elektrischen Stroms, der an die Elektrolysezelle angelegt wird und dazu ausreichend ist, anodische und kathodische Reaktionen gemäß der Anoden- (1) und Kathodenreaktion (2) zu induzieren;
c) Halten der Elektrolysezelle bei einem Betriebswasserpartialdruck ab 1 bis 30 bar;
d) Halten der Elektrolysezelle bei einer Betriebstemperatur, die dazu ausreichend ist, eine superprotonische Leitfähigkeit in dem Elektrolyten aus an der Anode erzeugten Wasserstoffionen zu induzieren;
e) Bereitstellen einer Strömung von gasförmigem H₂O als Heißdampf als eine Anodenreaktandenströmung an die Anode bei einer Strömungsgeschwindigkeit, die für das Ermöglichen der anodischen Reaktion ausreichend ist;
f) Bereitstellen einer Strömung von gasförmigem CO₂ als eine Kathodenreaktandenströmung zu der Kathode bei einer Strömungsgeschwindigkeit, die für das Ermöglichen der kathodischen Reaktion ausreichend ist;
g) Aufsammeln einer Kathodenproduktströmung aus der kathodischen Reaktion; und
h) wahlweise, Isolieren von Methan aus der Kathodenproduktströmung.

2. Verfahren nach Anspruch 1, weiter umfassend:
i) Aufsammeln einer Anodenproduktströmung aus der anodischen Reaktion.

3. Verfahren nach entweder Anspruch 1 oder 2, wobei die zumindest eine superprotonisch leitende Säureverbindung die allgemeine Formel (IB) aufweist:
(IB) MₓH_{y}AO₄; wobei;
M für Li, Na, K, Rb, Cs, NH₄ steht;
A für S, Se, P, As steht;
x für 1 oder 2 steht; y für 1 oder 2 steht; und
x+y für 2 steht, wenn A für S oder Se steht, und für 3 steht, wenn A für P oder As steht.

4. Verfahren nach einem des vorgehenden Anspruchs 1 oder 2, wobei die superprotonisch leitende Säureverbindung die allgemeine Formel (III) aufweist:
(III) MH₂PO₄; wobei
M für Li, Na, K, Rb, Cs, NH₄ steht.

5. Verfahren nach einem der vorgehenden Ansprüche, wobei die zumindest eine superprotonisch leitende Säureverbindung entweder KH₂PO₄ oder CsH₂PO₄ ist.

6. Verfahren nach entweder Anspruch 1 oder 2, wobei die zumindest eine superprotonisch leitende Säureverbindung entweder KH₅PO₄)₂ oder CsH₅(PO₄)₂ ist.

7. Verfahren nach einem der vorgehenden Ansprüche,
wobei der Elektrolyt eine Mischung aus zumindest zwei der superprotonisch leitenden Säureverbindungen umfasst.

8. Verfahren nach einem der vorgehenden Ansprüche,
wobei der Elektrolyt ferner ein Trägermaterial für die zumindest eine superprotonisch leitende Säureverbindung umfasst, und
wobei das Trägermaterial eine Pyrophosphat-Verbindung der allgemeinen Formel (VI) umfasst:
(VI) Mt(P₂O₇),
wobei Mt für Si, Ge, oder Sn stehen kann;
allein oder in Kombination mit einer Polybenzimidazol- (PBI)-Faserverstärkung.

9. Verfahren nach Anspruch 8, wobei das Trägermaterial entweder ein Sn(P₂O₇) oder Sn(P₂O₇) mit einer Polybenzimidazol- (PBI)-Faserverstärkung ist.

10. Verfahren nach einem der vorgehenden Ansprüche, wobei die Anode zumindest ein Oxid aus Iridium, vorzugsweise IrO₂ und/oder Ir₂O₃ umfasst.

11. Elektrolysezellensystem (10) umfassend eine Elektrolysezelle (11), die in einer Druckkammer (12) eingeschlossen ist; wobei die Elektrolysezelle einen Anodenraum (20) umfassend eine Anode (21) und ein isolierendes Anodengehäuse (24), in welchem die Anode eingebettet ist, und einen Kathodenraum (30) umfassend eine Kathode (31) und ein isolierendes Kathodengehäuse (34), in welchem die Kathode eingebettet ist, umfasst, und einen Elektrolyten (40), der in Kontakt mit und zwischen der Anode (21) und der Kathode (31) angeordnet ist, und wobei der Anodenraum (20) und der Kathodenraum (30) durch den Elektrolyten (40) und eine den Elektrolyten einschließende isolierende Dichtung (41) getrennt sind; wobei der Elektrolyt (40) zumindest eine superprotonisch leitende Säureverbindung der allgemeinen Formel (I) umfasst:
(I) MₓH_{y}(AO₄)_{z}, wobei
x für 1, 2 oder 3 steht;
y für 1, 2, 3, 4 oder 5 steht;
z für 1 oder 2 steht;
M für zumindest eines von Li, Na, K, Rb, Cs, Tl, NH₄;
und A für S, Se, P, As steht;
wobei der Anodenraum (20) ferner einen Anodenströmungsweg (22) für gasförmiges H₂O als Heißdampf zu der Anode (21) umfasst, der zum Inkontaktbringen
des Heißdampfes als anodischen Reaktanden mit der Anode bei einem Wasserpartialdruck ausgelegt ist; und einen Anodenproduktströmungsweg (23) von der Anode (21) umfasst, der Mittel (15) zum Halten eines konstanten Wasserpartialdrucks über die Anode umfasst;
wobei der Kathodenraum (30) ferner einen Kathodenströmungsweg (32) für gasförmiges CO₂ zu der Kathode (31) umfasst, der zum Inkontaktbringen des CO₂ als kathodischen Reaktanden mit der Kathode ausgelegt ist; und einen Kathodenproduktströmungsweg (33) von der Kathode umfasst, wahlweise umfassend Mittel (19) zum Isolieren von Methan aus einer Gasströmung; wobei das Elektrolysezellensystem (10) ferner Mittel zum Zirkulieren eines elektrischen Stroms über die Elektrolysezelle (11), und jeweilige Mittel (13,17,18) zum Leiten einer jeweiligen Gasströmung durch einen jeweiligen Anoden- oder Kathodenraum (20,30) umfasst.

12. Elektrolysezellensystem (10) nach Anspruch 11,
wobei das System ferner zumindest einen jeweiligen anodischen und/oder kathodischen Strömungsweg (26,36) umfasst, der in Kontakt mit einer jeweiligen Anode (21) oder Kathode (22) angeordnet ist, um eine Verweilzeit eines anodischen oder kathodischen Reaktanden bei der jeweiligen Anode oder Kathode zu erhöhen.

13. Elektrolysezellensystem (10) nach Anspruch 11 oder 12, wobei das System ferner einen Wasser-zu-Dampf-Verdampfer (14) umfasst, der an der Anodenströmungsweg (22) angeordnet ist, um der Anode gasförmiges H₂O als Heißdampf bereitzustellen.

14. Elektrolysezellensystem (10) nach einem der Ansprüche 11 bis 13, wobei das System ferner einen Wasserkondensator (16) umfasst, der an der Anodenproduktströmungsweg (23) hinter den Mitteln (15) zum Halten eines konstanten Wasserpartialdrucks über die Anode (21) angeordnet ist.

15. Elektrolysezellensystem (10) nach einem der Ansprüche 11 bis 14, wobei die zumindest eine superprotonisch leitende Säureverbindung aus zumindest einer von einer superprotonisch leitenden Verbindung gemäß zumindest einer der folgenden allgemeinen Formeln ausgewählt ist:
(IB): MₓH_{y}AO₄; wobei M für Li, Na, K, Rb, Cs, NH₄ steht; A für S, Se, P, As steht; x für 1 oder 2 steht; y für 1 oder 2 steht; und x+y für 2 steht, wenn A für S oder Se steht, und für 3 steht, wenn A für P oder As steht;
(III): MH₂PO₄; wobei M für Li, Na, K, Rb, Cs, NH₄ steht;
(V): MH₅(PO₄)₂₎; wobei M für Li, Na, K, Rb, Cs, NH₄ steht.

## Revendications

1. Procédé de synthèse de méthane par co-électrolyse en 1 étape de H₂O et CO₂ en présence d'un électrolyte comprenant au moins un composé acide conducteur superprotonique de la formule générale (I)
(I) MₓH_{y}(AO₄)_{z}, dans laquelle
x est 1, 2 ou 3 ;
y est 1, 2, 3, 4 ou 5 ;
z est 1 ou 2 ;
M est au moins l'un de Li, Na, K, Rb, Cs, Tl, NH₄ ; et A est S, Se, P, As ;
ledit procédé comprenant :
a) la fourniture d'une cellule électrolytique sous pression comprenant une anode et une cathode, ledit électrolyte étant disposé entre ladite anode et ladite cathode ; et des ions hydrogènes étant produits au niveau de ladite anode selon une réaction d'anode (1)
(1) 4H₂O → 2O₂ + 8H⁺ + 8e⁻ ;
et dans lequel le méthane est produit à ladite cathode selon une réaction cathodique (2)
(2) CO₂ + 8H⁺ + 8e⁻ → CH₄ + 2H₂O;
ledit procédé comprenant en outre le fonctionnement de ladite cellule électrolytique par les étapes consistant à :
b) fournir un courant électrique appliqué à travers ladite cellule électrolytique suffisant pour induire des réactions anodiques et cathodiques selon lesdites réactions anodiques (1) et cathodiques (2) ;
c) maintenir ladite cellule électrolytique à une pression partielle d'eau de fonctionnement de 1 à 30 bars ;
d) maintenir ladite cellule électrolytique à une température de fonctionnement suffisante pour induire une conduction superprotonique dans ledit électrolyte d'ions hydrogènes produits au niveau de ladite anode ;
e) fournir un flux de H₂O gazeux sous forme de vapeur surchauffée en tant que flux de réactifs anodiques vers ladite anode à un débit suffisant pour permettre ladite réaction anodique ;
f) fournir un flux de CO2 gazeux en tant que flux de réactifs cathodiques vers ladite cathode à un débit suffisant pour permettre ladite réaction cathodique ;
g) collecter un flux de produits cathodiques provenant de ladite réaction cathodique ; et
h) éventuellement, isoler le méthane dudit flux de produits cathodiques.

2. Procédé selon la revendication 1, comprenant en outre :
i) collecter un flux de produits anodiques provenant de ladite réaction cathodique.

3. Procédé selon l'une des revendications 1 ou 2, dans lequel ledit au moins un composé acide conducteur superprotonique a la formule générale (IB) :
(IB) MₓH_{y}AO₄ ; dans laquelle ;
M est Li, Na, K, Rb, Cs, NH₄ ;
A est S, Se, P, As ;
x est 1 ou 2 ; y est 1 ou 2 ; et
x+y vaut 2 lorsque A est S ou Se, et 3 lorsque A est P ou As.

4. Procédé selon l'une quelconque des revendications précédentes, dans lequel ledit composé acide conducteur superprotonique a la formule générale (III) :
(III) MH₂PO₄ ; dans laquelle
M est Li, Na, K, Rb, Cs, NH₄.

5. Procédé selon l'une quelconque des revendications précédentes, dans lequel ledit au moins un composé acide conducteur superprotonique est soit KH₂PO₄ soit CSH₂PO₄.

6. Procédé selon l'une des revendications 1 ou 2, dans lequel ledit au moins un composé acide conducteur superprotonique est soit KH₅(PO₄)₂ ou CsH₅(PO₄)₂.

7. Procédé selon l'une quelconque des revendications précédentes,
dans lequel ledit électrolyte comprend un mélange d'au moins deux desdits composés acides conducteurs superprotoniques.

8. Procédé selon l'une quelconque des revendications précédentes,
dans lequel ledit électrolyte comprend en outre un matériau de support pour ledit au moins un composé acide conducteur superprotonique, et
dans lequel ledit matériau de support comprend un composé pyrophosphate de formule générale (VI) :
(VI) Mt(P₂O₇),
dans laquelle Mt peut être Si, Ge ou Sn ;
seul ou en association avec un renfort fibreux polybenzimidazole (PBI).

9. Procédé selon la revendication 8, dans lequel ledit matériau de support est soit du Sn(P₂O₇) soit du Sn(P₂O₇) avec un renfort en fibres de polybenzimidazole (PBI).

10. Procédé selon l'une quelconque des revendications précédentes, dans lequel ladite anode comprend au moins un oxyde d'iridium, de préférence IrO₂ et / ou Ir₂O₃.

11. Système de cellule électrolytique (10) comprenant une cellule électrolytique (11) enfermée dans une chambre de pression (12) ; ladite cellule électrolytique comprenant un compartiment anodique (20) comprenant une anode (21) et une enceinte anodique isolante (24) dans laquelle ladite anode est encastrée, et un compartiment cathodique (30) comprenant une cathode (31) et une enceinte cathodique isolante (34) dans laquelle ladite cathode est noyée, et un électrolyte (40) disposé en contact avec et entre ladite anode (21) et ladite cathode (31), et dans lequel ledit compartiment anodique (20) et ledit compartiment cathodique (30) sont séparés par ledit électrolyte (40) et un joint isolant (41) renfermant ledit électrolyte ; ledit électrolyte (40) comprenant au moins un composé acide conducteur superprotonique de la formule générale (I):
(I) MₓH_{y}(AO₄)_{z}, dans laquelle
x est 1, 2 ou 3 ;
y est 1, 2, 3, 4 ou 5 ;
z est 1 ou 2 ;
M est au moins l'un de Li, Na, K, Rb, Cs, TI, NH₄ ;
et A est S, Se, P, As ;
dans lequel ledit compartiment anodique (20) comprend en outre un trajet d'écoulement anodique (22) pour H₂O gazeux sous forme de vapeur surchauffée vers ladite anode (21) agencé pour mettre en contact ladite vapeur surchauffée à une pression partielle d'eau de 1 à 30 bars en tant que réactif anodique avec ladite anode ; et un trajet d'écoulement de produits anodiques (23) à partir de ladite anode (21) comprenant des moyens (15) pour maintenir une pression partielle d'eau constante à travers ladite anode ; dans lequel ledit compartiment cathodique (30) comprend en outre un trajet d'écoulement cathodique (32) pour le CO₂ gazeux vers ladite cathode (31) agencé pour mettre en contact ledit CO₂ en tant que réactif cathodique avec ladite cathode; et un trajet d'écoulement de produits cathodiques (33) à partir de ladite cathode (31), comprenant facultativement des moyens (19) pour isoler le méthane d'un écoulement gazeux ;
ledit système de cellule électrolytique (10) comprenant en outre des moyens pour faire circuler un courant électrique à travers ladite cellule électrolytique (11), et des moyens respectifs (13, 17, 18) pour faire passer un flux de gaz respectif à travers un compartiment anodique ou cathodique respectif (20, 30).

12. Système de cellule électrolytique (10) selon la revendication 11,
le système comprenant en outre au moins un trajet d'écoulement sinueux anodique et / ou cathodique respectif (26, 36) agencé en contact avec une anode (21) ou une cathode (22) respective pour augmenter un temps de séjour d'un réactif anodique ou cathodique respectif au niveau de ladite anode ou cathode respective.

13. Système de cellule électrolytique (10) selon la revendication 11 ou 12, le système comprenant en outre un évaporateur eau-vapeur (14) disposé sur ledit trajet d'écoulement anodique (22) pour fournir du H₂O gazeux sous forme de vapeur surchauffée à ladite anode.

14. Système de cellule électrolytique (10) selon l'une quelconque des revendications 11 à 13, le système comprenant en outre un condenseur à eau (16) disposé sur ledit trajet d'écoulement de produits anodiques (23) après lesdits moyens (15) pour maintenir une pression partielle d'eau constante à travers ladite anode (21).

15. Système de cellule électrolytique (10) selon l'une quelconque des revendications 11 à 14, dans lequel ledit au moins un composé acide conducteur superprotonique est choisi parmi au moins l'un d'un composé acide conducteur superprotonique selon au moins l'une des formules générales :
(IB) : MₓH_{y}AO₄ ; dans laquelle M est Li, Na, K, Rb, Cs, NH₄ ; A est S, Se, P, As ; x est 1 ou 2 ; y est 1 ou 2 ; et x+y vaut 2 lorsque A est S ou Se, et 3 lorsque A est P ou As ;
(III) : MH₂PO₄ ; dans laquelle M est Li, Na, K, Rb, Cs, NH₄ ;
(V) : MH₅(PO₄)₂ ; dans laquelle M est Li, Na, K, Rb, Cs, NH₄.
